# EUROPÄISCHE PATENTSCHRIFT

(11) **EP 0 665 803 B1**
(45) Veröffentlichungstag und Bekanntmachung des Hinweises auf die Patenterteilung: **04.06.1997**
(21) Anmeldenummer: 93923562.8
(22) Anmeldetag: 27.10.1993
(51) Int. Cl.: B65D 6/16, B65D 6/18

(54) **MEHRWEG-TRANSPORTBEHÄLTER**
REUSABLE CARRY CONTAINER
BAC DE TRANSPORT REUTILISABLE

(30) Priorität: 28.10.1992 DE 9214567 U
(43) Veröffentlichungstag der Anmeldung: 09.08.1995
(73) Patentinhaber: MAUSER-WERKE GmbH, D-50321 Brühl (DE)
(72) Erfinder: BURGDORF, Märten, D-53913 Swistal (DE)
(86) Internationale Anmeldenummer: EP9302981
(87) Internationale Veröffentlichungsnummer: WO9410049

(56) Entgegenhaltungen:
- EP-A- 0 045 152
- EP-A- 0 443 327
- WO-A-92/05078
- DE-A- 2 064 801

## Beschreibung

Die Erfindung betrifft einen zusammenklappbaren bzw. zusammenfaltbaren Mehrweg-Transportbehälter aus thermoplastischem Kunststoff in Rechteckbauweise (Kastenform) mit einem derartigen Fassungsvermögen, daß der Behälter auch im befüllten Zustand von einer Person von Hand getragen und manipuliert werden kann, mit einem unteren, an der Bodenplatte umlaufenden Rahmenteil, an welchem wenigstens zwei sich gegenüberliegende Seitenwandungen verschwenkbar angelenkt sind.

Zusammenlegbare Transportbehälter aus spritzgußgeformten zusammengefügten Einzelteilen in Größenordnungen, die noch von Hand manipuliert werden können, sind allgemein bekannt, so z.B. aus dem deutschen Gebrauchsmuster DE-U 91 02 843. Bei dem hieraus bekannten offenen Kunststoff-Behälter ohne Deckel sind zumindest zwei gegenüberliegende Seitenwandungen mittels Scharnieren verschwenkbar an einem mit der Bodenplatte einteilig verbundenen Flanschrand bzw. Rahmenteil befestigt. Das Besondere dieser Klappkonstruktion besteht darin, daß diese Klappbox in zusammengeklapptem Zustand nur noch die halbe Grundfläche der aufgeklappten Box benötigt.
Aus der internationalen Veröffentlichungsschrift WO 92/05078 ist weiterhin ein zusammenfaltbarer Paletten-Container bekannt, bei dem die mittels Scharnieren angelenkten Seitenwandungen verschwenkbar ausgebildet sind. Eine separate Deckplatte ist auflegbar, aber nicht über ein Scharnier fest mit einer Seitenwandung verbunden. Zum Zusammenfalten des oben offenen Containers werden zunächst zwei gegenüberliegende Seitenwandungen um 270° nach außen hinter die jeweilige benachbarte Seitenwandung zurückgeklappt, um dann zusammen mit dieser Seitenwandung nach innen auf den Containerboden bzw. auf die bereits zuerst eingeklappte Seitenwandung aufgelegt zu werden. Ein Behälter dieser Größenordnung ist jedoch nicht mehr von einer Person von Hand manipulierbar und nicht für eine Verkaufsregal-Einlagerung zur Produktentnahme durch den einzelnen Kunden geeignet.

Die europäische Veröffentlichungsschrift EP-A- 0 443 327 offenbart eine zusammenklappbare Transportkiste mit nach innen verschwenkbar angelenkten Seitenwänden und einem auflegbaren bzw. abnehmbaren Deckel. Auch dieser Deckel ist eine separate, lose aufgesetzte Platte, die mit der Transportkiste nicht verbunden ist. In einer besonderen Ausgestaltungsform dieser Transportkiste (Fig. 12) sind zusätzlich an der Unterseite des Bodens aufklappbare Standbeine angebracht, so daß die Transportkiste im Bedarfsfalle z. B. für Aussteller auf Messen nach Art eines Pultes auch als Verkaufsregal oder Verkaufstresen benutzt werden kann. Weiterhin ist vorgesehen, daß diese bekannte Transportkiste auch als seitlich zugängliches Behältnis verwendet werden kann, indem eine der Seitenwände, nach innen auf den Kistenboden eingeklappt wird, während sich die anderen Seitenwände in ihrer vertikalen Position befinden. Ein Einklappen der Seitenwandung um 90° nach innen in die Kiste hinein kann allerdings nur im leeren Zustand erfolgen. Ein Einklappen der Seitenwandung nach innen bei einer befüllten Kiste ist logischerweise nicht möglich und eine Entnahme von Füllgütern aus der Kiste kann ebensowenig erfolgen.

Bei nachstehender Erfindung ist an ein Mehrweg-Transportbehälter-System gedacht, das insbesondere der Versorgung des Einzelhandels dienen soll und mit welchem die Verkaufsgüter mitsamt der Umverpackung, die bisher aus nicht wiederverwertbaren Pappkartons bestand, direkt in das Verkaufsregal eingelagert werden und vom Einzelkunden dann direkt aus dem Lagerbehälter entnommen werden können. Bei Pappkarton-Umverpackungen ist es - insbesondere in Selbstbedienungsläden - bisher üblich, die Kartons direkt in die Regale einzustellen und den Verpackungsinhalt den Kunden durch Abschneiden des Deckels oder Herausschneiden eines Teiles der Seitenwandung zugänglich zu machen. Dabei kam es oftmals vor, daß beim Aufschneiden der Pappkartons mittels scharfer spitzer Spezialmesser die innen an der Pappwandung anliegenden Verkaufsgüter bzw. deren Einzelverpackung (wie z. B. eine Vakuumfolie) beschädigt wurden und einzelne Verkaufsgüter (insbesondere Lebensmittel) vorzeitig verdarben und ungenießbar wurden.

Es ist Aufgabe der vorliegenden Erfindung, einen Mehrweg-Transportbehälter der eingangs beschriebenen Art zu schaffen, der eine einfache Entnahme der Verkaufsgüter aus dem Verkaufsregal bzw. aus dem Transport/Lagerbehälter gestattet und der nach Entleerung als zusammengefaltete Einheit wieder in den Behälterkreislauf zurückgegeben werden kann.

Diese Aufgabe wird bei dem erfindungsgemäßen Mehrweg-Transportbehälter zum einen dadurch gelöst, daß der Deckel aus zwei gleichen Deckelhälften besteht, die mittels Scharnieren an zwei sich gegenüberliegenden Seitenwandungen derart verschwenkbar angelenkt sind, daß sie um 270° nach außen auf die jeweilige Seitenwandung aufklappbar ausgebildet sind, wobei wenigstens eine der kürzeren Seitenwandungen als gesamte einteilige Einheit als Entnahmeklappe zur Freigabe des Verkaufsgutes mittels Scharnieren gelenkig um 270° verschwenkbar unter die Bodenplatte klappbar am unteren Rahmenteil angelenkt gelagert ist und separat geöffnet werden kann. Dadurch ist der Inhalt des Mehrweg-Transportbehälters auf einfache und schnelle Weise direkt aus dem Verkaufsregal bzw. aus dem Lagerbehälter entnehmbar.

Gemäß einer anderen erfindungsmäßigen Lösung ist vorgesehen, daß der Deckel aus zwei gleichen Deckelhälften besteht, die mittels Scharnieren an zwei sich gegenüberliegenden Seitenwandungen derart verschwenkbar angelenkt sind, daß sie um 270° nach außen auf die jeweilige Seitenwandung aufklappbar ausgebildet sind, wobei wenigstens eine der kürzeren Seitenwandungen als Entnahmeklappe zur Freigabe des Verkaufsgutes hälftig geteilt ausgebildet ist und die Seitenwandungshälften auf den beiden der mittleren Teilungslinie gegenüberliegenden Außenseiten um 270° nach außen verschwenkbar gelagert bzw. angelenkt sind. Dabei kann einmal die Teilungslinie vertikal verlaufen, wobei dann die beiden Seitenwandungshälften jeweils seitlich außen gelagert und um 270° horizontal nach außen verschwenkbar ausgebildet sind.
In anderer Ausführung kann die Teilungslinie horizontal verlaufen und die Seitenwandungshälften sind jeweils oben und unten gelagert und um 270° nach oben und unten verschwenkbar ausgebildet.
Die Verkaufsgüter sind so durch die jeweils geschaffene große Entnahmeöffnung kundenfreundlich aus dem Regal zu entnehmen.
Mit den erfindungsgemäßen Ausführungen des Mehrweg-Transportbehälters besteht also die Möglichkeit, die geöffneten Behälter mit um 270° aufgeklappter und verriegelter Seitenwandung bzw. Seitenwandungshälften direkt zusammen mit der Ware ins Regal einzulagern, so daß die Kunden wie bisher die Ware einzeln durch die aufgeklappte Seitenwandung (= große Entnahmeöffnung) aus dem Behälter nehmen können. Dadurch entfällt für den Einzelhändler eine zeit- und personalaufwendige Auspackerei der Verkaufsgüter aus dem Transportbehälter und die Einlagerung in die Regale.

In weiterer Ausgestaltung der Erfindung ist vorgesehen, daß die verschwenkbare Seitenwandung oder/und der obere Behälterdeckel gegen unbefugtes Öffnen mittels entsprechender Plombierungsmittel wie z.B. Klebefolie, Plombier-Spreizstifte oder ähnlichem abschließbar bzw. plombierbar ist, um den Behälterinhalt gegen eine Entnahme durch unberechtigte Personen zu sichern und eine optische Originalitätssicherung zu gewährleisten.
Es ist vorgesehen, daß die verschwenkbare Seitenwandung bzw. die Seitenwandungshälften in geöffneter Position mittels z.B. Feder-Arretierungstiften verriegelbar sind.
Damit der Transport- bzw. nun Lagerbehälter (im geöffneten Entnahmezustand) bei untergeklappter Seitenwandung feststeht und nicht etwa kippt, ist weiterhin vorgesehen, daß entweder eine entsprechende Ausnehmung auf der Unterseite der Bodenplatte ausgebildet ist, in welche die Seitenwandung eingesenkt werden kann, oder daß auf der dem Klappscharnier gegenüberliegenden Seite der Bodenplatte herausklappbare Standfüßchen oder eine durchgehende herausschwenkbare Standleiste vorgesehen ist, die dem Transportbehälter einen festen und sicheren Stand verleiht. Die Standfüßchen bzw. die Standleiste sind so ausgebildet, daß sie z.B. im Bedarfsfall bei Eindrücken zweier außenseitiger Druckknöpfe mittels Federkraft herausspringen und wenn sie nicht benötigt werden einfach eingeklappt und arretiert werden.

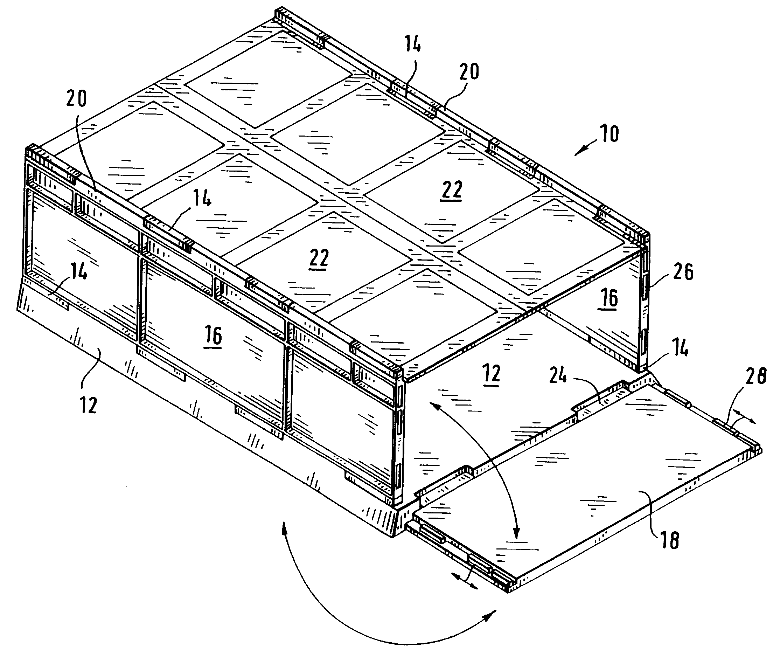

In Figur 1 ist eine bevorzugte Ausführungsform eines erfindungsgemäßen Transportbehälters mit einer um 270° verschwenkbar an Scharnieren 24 gelagerten Seitenwandung 18 dargestellt. Der Transportbehälter 10 weist eine Bodenplatte 12 mit einem umlaufenden Rahmenteil 14 auf, an welchem die Scharniere der verschwenkbaren Seitenwandungen 16, 18 angeschlagen sind. Die längeren Seitenwandungen 16 sind an ihrer oberen Kante mit weiteren Scharnieren 20 für die beiden oberen Deckelhälften 22 versehen. Für den Rücktransport oder zur Lagerung eines leeren Transportbehälters wird dieser mit einer erreichten Platzersparnis von ca. 75 % wie folgt zusammengeklappt:
Zunächst werden die beiden Deckelhälften 22 um 270° nach außen auf die beiden Seitenwandungen 16 geklappt. Dann werden die Verriegelungen in den Ecken zwischen den kurzen und langen Seitenwandungen 16, 18 gelöst und die beiden kürzeren Seitenwandungen 18 und danach die beiden längeren Seitenwandungen 16 werden (mitsamt den außen anliegenden Deckelhälften 22) nach innen geklappt.
Für die Entnahme des Verkaufsgutes aus einem befüllten Lagerbehälter ist nun zur Schaffung einer vorderseitigen Entnahmeklappe die kürzere Seitenwandung 18 mit einem besonderen Doppelscharnier 24 ausgestattet. Die Seitenwandung 18 ist in Normalposition wie auch in untergeklappter Position verriegelbar.
Die Seitenwandung 18 weist dazu für eine Verriegelung an ihren Außenrändern entsprechende Federkeile 28 auf und die beiden benachbarten anderen Seitenwandungen sind mit Nuten 26 versehen. In zugeklappter Position ist die Seitenwandung 18 verriegelt. Zum Herumklappen wird sie z.B. leicht hochgezogen, dadurch entriegelt und in eine um 270° verschwenkte Position auf der Unterseite der Bodenplatte 12 z.B. auf gleiche Weise wieder eingerastet und verriegelt. Die Bodenplatte 12 weist zweckmäßigerweise auf ihrer Unterseite zur Aufnahme der aufgeklappten Seitenwandung eine entsprechende flache Aussparung auf, so daß sich im Bedarfsfalle eine glatte untere Aufstellfläche für den Transportbehälter ergibt.
Die Seitenwandung 42 ist gleichfalls wie der Deckel mit Plombierungsmitteln als Originalitätsverschluß versehen. Der erfindungsgemäße Transport-/Lagerbehälter wird vorzugsweise in zwei Größen hergestellt, die auch im befüllten Zustand noch problemlos von einer Person von Hand getragen und manipuliert werden können : Kleine Größe ca. 400 x 300 x 230 mm mit einem Fassungsvermögen von ca. 19 l und die größere Ausführung mit Abmessungen von ca. 600 x 400 x 230 mm mit einem Nutzvolumen von ca. 41 l.

## Patentansprüche

1. Zusammenklappbarer bzw. zusammenfaltbarer Mehrweg-Transportbehälter (10) aus thermoplastischem Kunststoff in Rechteckbauweise (Kastenform) mit einem derartigen Fassungsvermögen, daß der Behälter auch im befüllten Zustand von einer Person von Hand getragen und manipuliert werden kann, mit einem unteren, an der Bodenplatte (12) umlaufenden Rahmenteil (14), an welchem wenigstens zwei sich gegenüberliegende Seitenwandungen (16,18) verschwenkbar angelenkt sind, bei dem der Deckel aus zwei gleichen Deckelhälften (22) besteht, die mittels Scharnieren an zwei sich gegenüberliegenden Seitenwandungen derart verschwenkbar angelenkt sind, daß sie um 270° nach außen auf die jeweilige Seitenwandung aufklappbar ausgebildet sind,
wobei wenigstens eine der kürzeren Seitenwandungen (18) als gesamte einteilige Einheit als Entnahmeklappe zur Freigabe des Verkaufsgutes mittels Scharnieren (24) gelenkig um 270° am unteren Rahmenteil (14) gelagert und unter die Bodenplatte (12) klappbar verschwenkbar angelenkt ist.

2. Zusammenklappbarer bzw. zusammenfaltbarer Mehrweg-Transportbehälter (10) aus thermoplastischem Kunststoff in Rechteckbauweise (Kastenform) mit einem derartigen Fassungsvermögen, daß der Behälter auch im befüllten Zustand von einer Person von Hand getragen und manipuliert werden kann, mit einem unteren, an der Bodenplatte (12) umlaufenden Rahmenteil (14), an welchem wenigstens zwei sich gegenüberliegende Seitenwandungen (16,18) verschwenkbar angelenkt sind, bei dem der Deckel aus zwei gleichen Deckelhälften (22) besteht, die mittels Scharnieren an zwei sich gegenüberliegenden Seitenwandungen derart verschwenkbar angelenkt sind, daß sie um 270° nach außen auf die jeweilige Seitenwandung aufklappbar ausgebildet sind, wobei wenigstens eine der kürzeren Seitenwandungen (18) als Entnahmeklappe zur Freigabe des Verkaufsgutes hälftig geteilt ausgebildet ist, und die Seitenwandungshälften auf den beiden, der mittleren Teilungslinie gegenüberliegenden Außenseiten um 270° nach außen verschwenkbar gelagert sind.

3. Transportbehälter nach Anspruch 2,
**dadurch gekennzeichnet,** daß
die Teilungslinie vertikal verläuft und die beiden Seitenwandungshälften jeweils seitlich außen gelagert und um 270° nach außen verschwenkbar ausgebildet sind.

4. Transportbehälter nach Anspruch 2,
**dadurch gekennzeichnet,** daß
die Teilungslinie horizontal verläuft und die Seitenwandshälften jeweils oben und unten gelagert und um 270° nach oben und unten verschwenkbar ausgebildet sind.

5. Transportbehälter nach Anspruch 1, 2 oder 4,
**dadurch gekennzeichnet,** daß
die unten gelagerte Seitenwandung (18) seitlich außen jeweils eine mit den beiden anderen angrenzenden Seitenwandungen (16) gemeinsame Verriegelung (26,28) aufweist.

6. Transportbehälter nach einem der vorhergehenden Ansprüche 1 bis 5,
**dadurch gekennzeichnet,** daß
die um 270° verschwenkbare Seitenwandung (18) bzw. die Seitenwandungshälften in voll geöffneter Position am äußeren Behältergehäuse (angrenzende Seitenwandungen bzw. Bodenplatte (12)) verriegelbar ausgebildet ist/sind.

7. Transportbehälter nach einem der vorhergehenden Ansprüche 1 bis 6,
**dadurch gekennzeichnet,** daß
die kürzere Seitenwandung (18) um 270° unter die Bodenplatte (12) verschwenkbar ausgebildet ist, und die Bodenplatte (12) auf der dem Schwenkschanier (24) gegenüberliegenden Seite mit zwei herausschwenkbaren Standfüßen bzw. einer durchgehenden herausschwenkbaren Standleiste versehen ist.

8. Transportbehälter nach einem der vorhergehenden Ansprüche 1 bis 7,
**dadurch gekennzeichnet,** daß
die Bodenplatte (12) auf ihrer Unterseite mit einer entsprechenden Aussparung/Ausnehmung versehen ist, in welche die um 270° verschwenkte Seitenwandung (18) versenkbar ist.

## Claims

1. A collapsible or folding, reusable transportation container (10) made of thermoplastics and of rectangular construction (box form) with a capacity such that the container can be handled and carried by a person also when it is full, comprising a lower frame part (14) which surrounds a base plate (12) and on which at least two opposing sidewalls (16, 18) are pivotably articulated, the cover comprising two like cover halves (22) pivotably articulated by means of hinges on two opposing sidewalls in such a manner that they are pivotable outwards through 270° onto the respective sidewall, wherein at least one of the shorter sidewalls (18), as a complete one-part unit, is mounted on the lower frame part (14) so as to pivot through 270° by means of hinges (24) as a dispensing flap for providing access to the merchandise and is articulated so as to pivot under the base plate (12).

2. A collapsible or folding, reusable transportation container (10) made of thermoplastics and of rectangular construction (box form) with a capacity such that the container can be handled and carried by a person also when it is full, comprising a lower frame part (14) which surrounds a base plate (12) and on which at least two opposing sidewalls (16, 18) are pivotably articulated, the cover comprising two like cover halves (22) pivotably articulated by means of hinges on two opposing sidewalls in such a manner that they are pivotable outwards through 270° onto the respective sidewall, wherein at least one of the shorter sidewalls (18), being divided in half, is formed as a dispensing flap for providing access to the merchandise, and the sidewall halves are mounted on the two outer edges opposite the central dividing line so as to pivot outwards through 270°.

3. A transportation container according to claim 2, characterised in that the dividing line extends vertically and the two sidewall halves are each mounted by their outer lateral edge and are formed so as to pivot outwards through 270°.

4. A transportation container according to claim 2, characterised in that the dividing line extends horizontally and the sidewall halves are mounted at the top and bottom and are formed so as to pivot upwards and downwards through 270°.

5. A transportation container according to claim 1, 2 or 4, characterised in that a locking device (26, 28) is provided on the outer lateral edges of the sidewall (18) mounted at the bottom and on the two other, adjacent sidewalls (16).

6. A transportation container according to any one of the preceding claims 1 to 5, characterised in that the sidewall (18) or sidewall halves, pivotable through 270°, is/are formed so as to be lockable on the outer container casing (adjacent sidewalls or base plate (12)) in the fully open position.

7. A transportation container according to any one of the preceding claims 1 to 6, characterised in that the shorter sidewall (18) is formed so as to pivot through 270° under the base plate (12), and the base plate (12) is provided with two swing-out standing feet or a continuous, swing-out standing strip on the side opposite the pivoting hinge (24).

8. A transportation container according to any one of the preceding claims 1 to 7, characterised in that the base plate (12) is provided on its underside with a cavity / recess into which the sidewall (18), pivoted through 270°, is sinkable.

## Revendications

1. Récipient de transport (10) réutilisable, pliable, en matière synthétique thermoplastique, de construction rectangulaire (forme de caisse) dont la capacité est telle qu'il puisse être porté à la main et être manipulé par une personne même lorsqu'il est rempli, qui comporte un cadre inférieur (14) continu sur tout le pourtour de la plaque de fond (12), sur lequel sont articulées au moins deux parois latérales (16), (18) se faisant face, et, dont le couvercle se compose de deux moitiés (22) identiques, articulées par des charnières sur les parois latérales se faisant face de manière à pouvoir pivoter de 270° vers l'extérieur pour être rabattues sur la paroi latérale correspondante,
où au moins l'une (18) des parois latérales plus courtes, qui sert de volet de prélèvement des produits contenus, est constituée d'un élément unique articulé par des charnières (24) sur le cadre inférieur (14) avec un angle de pivotement de 270° et peut être rabattu sous la plaque de fond (12).

2. Récipient de transport (10) réutilisable, pliable, en matière synthétique thermoplastique, de construction rectangulaire (forme de caisse) dont la capacité est telle qu'il puisse être porté à la main et être manipulé par une personne même lorsqu'il est rempli, qui comporte un cadre inférieur (14) continu sur tout le pourtour de la plaque de fond (12), sur lequel sont articulées au moins deux parois latérales (16), (18) se faisant face, et, dont le couvercle se compose de deux moitiés (22) identiques, articulées par des charnières sur les parois latérales se faisant face de manière à pouvoir pivoter de 270° vers l'extérieur pour être rabattues sur la paroi latérale correspondante,
où au moins l'une (18) des parois latérales plus courtes, qui sert de volet de prélèvement des produits contenus, est divisée en deux moitiés articulées sur les côtés extérieurs faisant face à la ligne de division médiane en pouvant pivoter de 270° vers l'extérieur.

3. Récipient de transport selon la revendication 2 *caractérisé en ce que* la ligne de division est verticale, les deux moitiés de paroi étant articulées sur les côtés latéraux extérieurs en pouvant pivoter de 270° vers l'extérieur.

4. Récipient de transport selon la revendication 2 *caractérisé en ce que* la ligne de division est horizontale, les deux moitiés de paroi étant articulées sur le côté supérieur, respectivement le côté inférieur, en pouvant pivoter de 270° vers l'extérieur.

5. Récipient de transport selon les revendications 1, 2 ou 4 *caractérisé en ce que* la paroi latérale (18) articulée sur le côté inférieur présente sur ses côtés latéraux extérieurs des moyens de verrouillage (26), (27) communs aux parois latérales adjacentes (16).

6. Récipient de transport selon l'une des revendications 1 à 5 *caractérisé en ce que* la paroi latérale (18), respectivement les moitiés de paroi latérale, pouvant pivoter de 270° peuvent être verrouillées dans leur position d'ouverture complète sur la face extérieure du récipient (paroi latérale, respectivement plaque de fond (12) adjacente).

7. Récipient de transport selon l'une des revendications 1 à 6 *caractérisé en ce que* la paroi latérale plus courte (18) peut pivoter de 270° pour être rabattue sous la plaque de fond (12) qui comporte sur le côté opposé à la charnière (24) deux pieds, respectivement un listel d'appui continu, pouvant être sortis par pivotement.

8. Récipient de transport selon l'une des revendications 1 à 7 *caractérisé en ce que* la plaque de fond (12) comporte sur sa face inférieure un évidement / un enfoncement correspondant dans lequel la paroi latérale (18) peut se loger après pivotement.
